# EUROPÄISCHE PATENTANMELDUNG

(11) **EP 4 197 991 A1**
(43) Veröffentlichungstag der Anmeldung: **21.06.2023**
(21) Anmeldenummer: 22213981.8
(22) Anmeldetag: 15.12.2022
(51) Int. Cl.: C05F 17/60, C05F 17/70, C05F 17/907, C05F 17/979, C05F 17/986

(54) **KOMPOSTREAKTOR ZUR HERSTELLUNG VON BIOLOGISCH BESONDERS WERTVOLLEM KOMPOST SOWIE KOMPOSTIERVERFAHREN**

(30) Priorität: 16.12.2021 DE 102021133480
(71) Anmelder: raumideen GmbH & Co. KG, 88316 Isny (DE)
(72) Erfinder: de la Serna, Juan, 88316 Isny (DE)
(74) Vertreter: Hoppe, Lars

(57) **Zusammenfassung**

Die Erfindung betrifft einen Kompostreaktor (1), aufweisend eine Reaktorhülle (2) mit darin angeordneter Belüftungseinrichtung (3) und daran angeordneter Befeuchtungseinrichtung (4), wobei die Belüftungseinrichtung (3) wenigstens eine, einen Innenraum (5) der Reaktorhülle (2) in getrennte Kompartimente (6) teilende, luftdurchlässige Wandstruktur (7) und/oder eine luftdurchlässige Bodenstruktur (8) und wenigstens eine Luftzutrittsöffnung (9) in der Reaktorhülle (2) umfasst und wobei die Befeuchtungseinrichtung (3) eine Vorrichtung zur Abgabe von Feuchtigkeit an das im Benutzungsfall im Kompostreaktor (1) befindliche Substrat aufweist sowie ein Kompostierverfahren.

## Beschreibung

Die vorliegende Erfindung betrifft einen Kompostreaktor für die Kleinkompostierung im privaten oder landwirtschaftliche/gartenbaulichen Umfeld sowie ein Kompostierverfahren, insbesondere durchgeführt mit diesem Kompostreaktor.

Die moderne Landwirtschaft sieht sich eine Reihe von Herausforderungen gegenüber, insbesondere der Bodenerosion, Trockenheit und Verlust der Bodenfruchtbarkeit, letzteres insbesondere durch den Rückgang von Bodenlebewesen aufgrund eines starken Einsatzes von Herbiziden, Fungiziden, Düngemitteln und starker Bodenbearbeitung.

Es ist daher wünschenswert, die Menge an Bodenlebewesen zu erhöhen. Hierzu können qualitativ hochwertige Komposte verwendet werden, die ihrerseits aus organischen Materialien gewonnen werden, die im Weiteren als Substrat bezeichnet werden. Dieses Substrat besteht aus lebenden oder abgestorbenen Pflanzen- und ggf. tierischen Zellen, die von aeroben Mikroorganismen, insbesondere Bakterien, Pilzen aber auch Würmern und anderen Kerbtieren als Energielieferanten genutzt und dabei aerob abgebaut werden. Hierzu muss das feste Substrat aufgeschlossen und für die Mikroorganismen verwertbar gemacht werden, insbesondere auch durch Zugabe von Wasser, falls der Wassergehalt des Substrats nicht ausreicht. Eine Wasserzugabe erleichtert zum einen die Bewegung der Mikroorganismen, die sich in einem Wasserfilm um die einzelnen Substratteilchen bewegen können. Zum anderen wird so ein Quellen des Substrats erleichtert, wodurch die Mikroorganismen leichter in die Zellen eindringen können. Eine Luftzufuhr bei gleichzeitigem Abführen von beim Abbau entstehendem CO₂ und anderen Gasen ist für einen qualitativ hochwertigen Abbauprozess ebenfalls bedeutsam.

Zu Beginn des Abbaus des Substrats ist die Abbaurate maximal, sie verlangsamt sich mit der Zeit, ebenso ändert sich die Temperatur des Substrats während seines Abbaus, und verändert so die Bedingungen für die abbauenden Organismen. Die Zugabe stickstoffreicher Substratbestandteile während des Abbaus kann die Abbaurate ebenfalls beeinflussen. Während des Abbauprozesses verliert das Substrat etwa drei Viertel seines Volumens.

Aus dem Stand der Technik sind Kompostreaktoren für den privaten oder landwirtschaftlichen / gartenbaulichen Bereich bekannt, bei denen das in ihnen befindliche Substrat belüftet und befeuchtet wird. Oftmals werden in das Substrat zu dessen Belüftung vertikal orientierte Rohre eingesetzt, um die herum das befeuchtete, durchmischte organische Material aufgeschichtet wird. Nach Befüllung werden die Rohre entfernt und eine an eine Trinkwasserleitung anzuschließende Bewässerungsvorrichtung mit einigen Sprühdüsen installiert, die das Substrat regelmäßig mit Feuchtigkeit versorgen. Die Feuchtigkeit wird benötigt, um das Wachstum und die Vermehrung der in dem Substrat während der Rotte wirkenden Mikroorganismen wie Bakterien und Pilze zu verbessern. Nach einem längeren Zeitraum von oftmals einem Jahr ist die Rotte abgeschlossen und der so gewonnene Kompost kann auf den landwirtschaftlichen, gartenbaulichen oder privaten Gartenflächen verteilt werden. Ein Reaktor dieses Typs wurde vom College of Agriculture der Chico State University vorgestellt. Er ist jedoch arbeitsintensiv zu beschicken, aufgrund des Zusetzens der Belüftungsschächte nicht auffüllbar und nicht optimal hinsichtlich der Wasserzufuhr.

Vor diesem Hintergrund stellt sich die Erfindung die Aufgabe, einen Kompostreaktor anzugeben, der einen effizienteren Substratabbauprozess ermöglicht sowie ein entsprechendes Verfahren anzugeben.

Diese Vorrichtungsaufgabe wird gelöst durch einen Kompostreaktor, aufweisend eine Reaktorhülle mit darin angeordneter Belüftungseinrichtung und daran angeordneter Befeuchtungseinrichtung, wobei die Belüftungseinrichtung wenigstens eine, den Innenraum der Reaktorhülle in voneinander getrennte Kompartimente teilende, luftdurchlässige Wandstruktur und/oder eine luftdurchlässige Bodenstruktur und wenigstens eine Luftzutrittsöffnung in der Reaktorhülle umfasst und wobei die Befeuchtungseinrichtung eine Vorrichtung zur Abgabe von Feuchtigkeit an das im Benutzungsfall im Kompostreaktor befindliche Substrat aufweist. Die erfindungsgemäßen Kompartimente sind dabei solche, die entweder das Substrat in mehrere Teile teilen oder solche, die das Substrat von wenigstens einer der Reaktorhüllenwände trennen und so einen Luftzutritt zum Substrat erlauben. Die erfindungsgemäßen Kompartimente sind auch solche, die beide Funktionen erfüllen. Mit großem Vorteil ermöglicht dieser Kompostreaktor aufgrund der Kompartimentierung einen quasi-kontinuierlichen Betrieb, indem in unterschiedlichen Kompartimenten unterschiedlich weit abgebaute Substrate vorgehalten werden können, so dass ein Nachfüllen des Reaktors mit frischem Substrat während des Betriebes ermöglicht ist, als auch eine besonders effektive Abbauleistung, da die luftdurchlässige Wandstruktur sowie Bodenstruktur der Belüftungseinrichtung einen für einen effektiven Abbauprozess besonders wichtigen Gasaustausch ermöglicht und gleichzeitig die Funktion der Kompartimentierung übernimmt. Die Kompartimentierung kann dabei erfindungsgemäß horizontal, vertikal oder in beide Raumrichtungen erfolgen. Die jeweilige Form eines Kompartiments ist erfindungsgemäß zunächst nicht beschränkt, sie reicht von einem Kubus, einem Quader, einem Zylinder, einer hexagonalen Raumzelle bis zu jeder anderen, technisch realisierbaren geometrischen Form.

In Ausgestaltung der Erfindung ist vorgesehen, dass die Wandstruktur eine dreidimensionale Gitterstruktur ist, insbesondere eine doppelwandige Gitterstruktur ist. Unter einer dreidimensionalen Gitterstruktur wird dabei erfindungsgemäß jede Struktur verstanden, die durch ihre Poren einen Luftaustausch zwischen ihrer im Betriebszustand dem Substrat zugewandte(n) Seite(n) und einer davon abgewandten Seite aufweist, die auch eine innere Oberfläche der Gitterstruktur sein kann, sofern diese mit einer äußeren Umgebung in Verbindung stehen. Bevorzugt ist jedoch eine doppelwandige Gitterstruktur, die zwischen den beiden Wänden ein von Material weitestgehend freies Volumen aufweist, in dem bevorzugt allenfalls Abstandshalter, Stützkonstruktionen oder ähnliches für die beiden Wände angeordnet ist, jedoch kein porenaufweisendes Material wie in den Wänden selber. Besonders bevorzugt sind wabenartige oder vliesartige Strukturen der Wände.

Weist die Belüftungseinrichtung wenigstens zwei, in das im Benutzungsfall im Kompostreaktor befindliche Substrat eingebrachte Belüftungskanäle auf, insbesondere zur Kompartimentierung des Substrats, so werden die zuvor genannten Vorteile besonders einfach verwirklicht. Diese Belüftungskanäle sind dabei keine gesonderten Bauteile wie zum Stand der Technik erläutert, sondern temporäre Bestandteile der Belüftungsvorrichtung, die sich über die Zeit der Rotte verändern, da sie keine eigenen Wände aufweisen. Insbesondere sind diese Belüftungskanäle nichts anderes als in das Substrat gebohrte Kanäle, deren Wände aus Substratmaterial bestehen und sich daher während der Rotte verändernd sind. Auf gesonderte Hohlzylinder, um die das Substrat geschichtet werden muss, kann daher mit Vorteil verzichtet werden.

Weist ein Kompartiment eine solche Grundfläche und Höhe auf, dass weitestgehend ein Punkt eines im Benutzungsfall darin befindlichen Substrats nicht weiter als 50 cm, insbesondere nicht weiter als 35 cm bevorzugt nicht weiter als 25 cm von einem Bestandteil der Belüftungseinrichtung, insbesondere der nächsten Luftzufuhrmöglichkeit, entfernt ist. Diese kurzen Abstände zwischen dem Ort des Luftaustausches zwischen Substrat und Umgebung und dem Inneren des Substrates führen zu einer besonders guten und dauerhaft guten Durchlüftung des Substrats, die zu einem effizienten Abbau führt. Hierbei ist es unschädlich, wenn geringe Anteile des Substrates etwas weiter als 70 cm von einer passiv belüftenden Wand oder einem passiv belüftenden Boden entfernt ist. Bevorzugt sind jedoch solche Kompartimentgrößen, die Substrathöhen und/oder Substratbreiten von weniger als 70 cm ermöglichen. In diesem Fall kann eine Substratlänge dann 1 m oder mehr betragen, sofern wie geschildert ein Punkt im Substrat stets weniger als 35 cm von der nächsten Luftzufuhrmöglichkeit entfernt ist.

In Weiterbildung der Erfindung ist vorgesehen, dass die Befeuchtungseinrichtung eine im Benutzungsfall oberhalb des Substrats angeordnete Kapillarmatte zur flächenhomogenen Abgabe von Feuchtigkeit an das Substrat aufweist. Mit großem Vorteil ermöglicht die Kapillarmatte eine stets ausreichende, gleichmäßige Feuchtigkeitsabgabe, so dass die Rotte unter optimalen Bedingungen auch bei unterschiedlichen Rottestufen abläuft. Alternativ hierzu sind auch ein Ultraschallvernebler, der in der Reaktorhülle einen befeuchtenden Wassernebel erzeugt, und ein Tropfsystem erfindungsgemäß, bei dem ein oder mehrere Tropfkörper Wasser aus einem über einem Kompartiment befindlichen Wasserreservoir an das Substrat abgebend sind. Ebenfalls erfindungsgemäß wäre eine Wasserpumpe als Teil des Befeuchtungssystems, die Wasser aus einem Reservoir in das Substrat einbringt. Diese Alternativen werden erfindungsgemäß ebenso wie die Kapillarmatte sowohl bei der ersten Befüllung des Reaktors als auch bei dessen Betrieb eingesetzt. Die Kapillarmatte ist dabei vorzugsweise aus einem natürlichen Material wie Wolle, Hanf, Jute oder Mischungen daraus gebildet, insbesondere in Form eines Vlieses, kann aber auch synthetische Fasern enthalten oder sogar vollständig aus diesen bestehen.

In Weiterbildung der Erfindung ist vorgesehen, dass die Reaktorhülle einen Regenwassersammler als Teil der Befeuchtungseinrichtung aufweist, insbesondere in Form eines Deckels, und/oder eine Filtereinrichtung für Regenwasser und/oder die Reaktorhülle ein Reservoirvolumen für Wasser aufweist. Eine solche passive Wasserbeschaffung erlaubt mit Vorteil die Anordnung des Kompostreaktors weit von jedem Wasseranschluss entfernt, da aufgefangenes Regenwasser gesammelt und insbesondere über die Kapillarmatte stetig und in geringer Menge an das Substrat während der Rotte abgegeben wird. Die Filtereinrichtung verhindert die Verunreinigung und damit auch das Zusetzen, bzw. die Verringerung des Reservoirvolumens durch vom Wind oder vom Regen mitgeführten Verunreinigungen. Die Verwendung von Regenwasser ist auch deswegen vorteilhaft, weil es im Gegensatz zu Trinkwasser niemals chloriert und daher auch schädigend auf die Mikroorganismen einwirken kann. Der erfindungsgemäße schützende Deckel ist nur deswegen möglich, da ein Luftaustausch durch die Belüftungsvorrichtung ermöglicht ist. Er bietet insbesondere Schutz des Substrats vor Wettereinflüssen, Feuchtigkeitsverlust durch Verdunstung, aber auch vor Tieren, die das Substrat auf der Suche nach Nahrung durchwühlen und damit die Rotte unterbrechen könnten. Ebenso schützt der Deckel vor dem Eindringen von Pflanzen, wobei die Reaktorhülle aufgrund ihres bodenseitigen Abschlusses das Substrat auch vor dem Einwachsen von Pflanzenwurzeln schützt. Die Reaktorhülle ist daher bodenseitig insbesondere bis auf die weiter unten beschriebenen Wasserablass-/Lufteintrittsöffnungen dicht ausgebildet.

In Ausgestaltung der Erfindung ist vorgesehen, dass die Reaktorhülle ein Auffangvolumen für im Benutzungsfall aus der Rotte austretende Flüssigkeit aufweist. Ein solches Auffangvolumen verhindert ein oftmals unerwünschtes Austreten von Flüssigkeiten aus dem Substrat in die Umgebung, und damit deren Verunreinigung.

Schließlich ist noch in Weiterbildung der Erfindung vorgesehen, dass die Reaktorhülle ein oder mehr Mitglieder jeweils einfach oder mehrfach der Gruppe aufweist, gebildet durch ein Heizelement, einen Sensor, eine Elektronik, insbesondere ein Computer mit Datenspeicher- und Ausgabefunktion, eine Kupplungsvorrichtung, eine Seitenwandöffnung, eine Wärmeisolierung, einen Sammelbehälter für Würmer.

Mittels des oder der Heizelemente kann der Reaktor auf die jeweils optimale Temperatur für die Rotte eingestellt oder gehalten werden, ein Betrieb im Winter ist damit ebenfalls möglich. Dies ist besonders vorteilhaft, da die Rotte stark temperaturabhängig ist. Zu diesem Zweck kann auch eine Wärmeisolierung vorgesehen sein, sofern der Reaktor in Gegenden betrieben werden soll, die über einen längeren Zeitraum niedrige Temperaturen aufweisen. Der Sensor ist insbesondere ein Temperatursensor, bevorzugt eine Mehrzahl an Temperatursensoren, wobei auch Feuchtigkeitssensoren erfindungsgemäß sind. Die Temperatursensoren dienen zusammen mit der bevorzugt in einem Gehäuse, insbesondere einem mit der Reaktorhülle einstückigem Gehäuse, angeordneten Elektronik dazu, die Innen- und Außentemperatur des Kompostreaktors aufzuzeichnen, wobei für die Innentemperatur mehrere insbesondere vertikal beabstandete und bevorzugt in jedem Kompartiment vorhandene Sensorreihen vorgesehen sind. Auf diese Weise kann der Reaktor vor Frost geschützt werden und die optimale Temperatur für die jeweilige Rottephase ermittelt bzw. per Heizelement eingestellt werden. Ein Alarmsystem für eine Über- oder Unterschreitung eines vorgewählten Temperaturbereiches ist ebenfalls erfindungsgemäß und unterstützt einen Betreiber bei einem optimalen Betrieb der Vorrichtung. Ebenfalls vorgesehen ist ein Regenwassersammler, insbesondere in Form eines Speichervolumens in der Reaktorhülle. Erfindungsgemäß ist auch vorgesehen, dass die Elektronik eine Bluetoothschnittstelle aufweist, die mit einer App auf einem Smartphone, einem Server oder anderen Datenverarbeitungsmitteln kommuniziert und die Daten insbesondere in Echtzeit übertragend ist.

Eine Verbindungsvorrichtung an der Reaktorhülle zu einer zweiten erfindungsgemäßen Vorrichtung, insbesondere in Form eines Gelenks wie einem gebogenen Haken, der die Reaktorhülle der zweiten Vorrichtung umgreift, ermöglicht es, den Inhalt des ersten Reaktors vollständig in den zweiten Reaktor zu überführen. Hierzu kann die Reaktorhülle an der Seitenwand des Gelenks eine verschließbare Öffnung unterhalb des Reaktorschwerpunktes bei halber Füllung aufweisen.

Die Verfahrensaufgabe wird gelöst durch ein Rotteverfahren, insbesondere unter Verwendung des zuvor beschriebenen Reaktors, aufweisend einen ersten Schritt, bei dem Substrat mit Rottehilfsstoffen vermischt und homogenisiert wird, weiter aufweisend einen zweiten Schritt, bei dem das Substrat mit Wasser derart versetzt wird, dass freies, nicht an das Substrat gebundenes Wasser vorliegt, weiter aufweisend einen dritten Schritt, bei dem das nicht am Substrat gebundene Wasser nach dem zweiten Schritt entfernt wird, weiter aufweisend einen vierten Schritt der Rotte des Substrates.

In Weiterbildung dieses Verfahrens ist vorgesehen, dass alle oder einzelne Schritte in einem Kompostreaktor wie beschrieben durchgeführt werden.

Erfindungsgemäß ist auch ein Verfahren zur Rotte eines Substrats, insbesondere unter Verwendung eines Kompostreaktors gemäß einem der vorherigen Ansprüche, aufweisend einen in oder außerhalb des Reaktors durchgeführten ersten Schritt, bei dem Substrat mit Rottehilfsstoffen vermischt und homogenisiert wird, weiter aufweisend einen zweiten Schritt, bei dem das bereits in dem Kompostreaktor befindliche Substrat mit Wasser derart versetzt wird, dass der Kompostreaktor annähernd vollständig mit Wasser gefüllt ist und weiter aufweisend einen dritten Schritt, bei dem das nicht am Substrat gebundene Wasser nach dem zweiten Schritt aus dem Kompostreaktor entfernt wird. Demnach wird in einem ersten Schritt in oder außerhalb des Reaktors Substrat ggf. mit Rottehilfsstoffen vermischt und homogenisiert und dieses in einem zweiten Schritt bereits in dem Kompostreaktor befindlich mit Wasser derart versetzt, dass der Kompostreaktor annähernd vollständig mit Wasser gefüllt ist. Hierdurch wird das Substrat befeuchtet und auch gewaschen. Das nicht am Substrat gebundene Wasser wird in einem dritten Schritt aus dem Kompostreaktor entfernt, wonach die Rotte beginnt.

In Weiterbildung des Verfahrens ist ein Schritt des Einbringens von Belüftungskanälen in das Substrat vorgesehen. Dieser Schritt erfolgt erfindungsgemäß entweder nach dem Schritt des Entfernens des nicht am Substrat gebundenen Wassers oder vor der Versetzung des Substrats mit Wasser. Dieser Schritt wird insbesondere mit rohrförmigen Gegenständen in der Weise durchgeführt, dass diese in oder durch das Substrat bis zu dessen oder annähernd bis zu dessen unteren Ende gestochen und anschließend wieder entfernt werden. Die so gebildeten länglichen Hohlräume sorgen für einen guten Luftzutritt auch zu den inneren und tieferen Schichten des Substrates und gewährleisten damit einen homogenen aeroben Abbau im gesamten Substratkörper. Die Querschnittsfläche der zur Einbringung benutzten Gegenstände ist dabei beliebig wählbar. Ganz besonders bevorzugt sind runde oder ovale Querschnittsflächen, entsprechend beispielsweise einem Rundrohr. In diesem Schritt werden nach Anzahl und Abstand zueinander so viele Belüftungskanäle eingebracht, wie erforderlich insbesondere so, dass ein Punkt des Substrates nicht weiter als 50 cm, insbesondere nicht weiter als 35 cm bevorzugt nicht weiter als 25 cm von einem Belüftungskanal entfernt ist. Auf diese Weise kann mit einem einzigen Gegenstand, der zudem oftmals einfach zur Hand ist, die gewünschte und ausreichende Anzahl von Belüftungskanälen problemlos in das Substrat eingebracht werden.

In Weiterbildung des Verfahrens ist ein Schritt der Zugabe von Würmern vorgesehen, insbesondere nach Abschluss der initialen Erwärmungsphase nach 2 bis 3 Wochen, wenn die Rottetemperatur auf weniger als 28°C gefallen ist. Diese werden dann vor der Ernte der reifen Rotte abgesammelt und erneut verwendet.

Das für das Verfahren eingesetzte Substrat weist einen solchen Anteil an stickstoffreichen Verbindungen auf, dass die Temperatur während der Rotte nicht zu stark ansteigt und eine solche Substratteilchengröße, dass sich ein ausreichender Luftvolumenraum zwischen diesen bilden und halten kann. Das Substrat weist daher einen Anteil groben Materials wie Holzspäne und einen Anteil feinen Materials wie Sägespäne neben dem organischen Material auf.

Mit der erfindungsgemäß vorgesehenen Temperaturkontrolle kann die Rotte optimiert werden, da die Geschwindigkeit der meisten biologischen Abbauprozesse temperaturabhängig ist und eine bestimmte Temperatur gewünschte Mikroorganismen gegenüber unerwünschten bevorzugt. Ermöglicht ist so auch ein Abtöten von Pathogenen, das bei dreitägigen Temperaturen von 55°C oder zweitägigen Temperaturen von 62°C jeweils in der Gegenwart von Sauerstoff erfolgt. Mit Vorteil verhindert die aktive Temperatursteuerung des Verfahrens dabei ein Überschreiten der Grenze von 65°C, die zu einem Abtöten von erwünschten humus-bildenden Mikroorganismen führen würde.

Die Erfindung wird nachfolgend anhand der Figuren der Zeichnung näher beschrieben, wobei gleiche Bauteile mit denselben Bezugszeichen versehen wurden. Die Figuren zeigen dabei im Einzelnen:

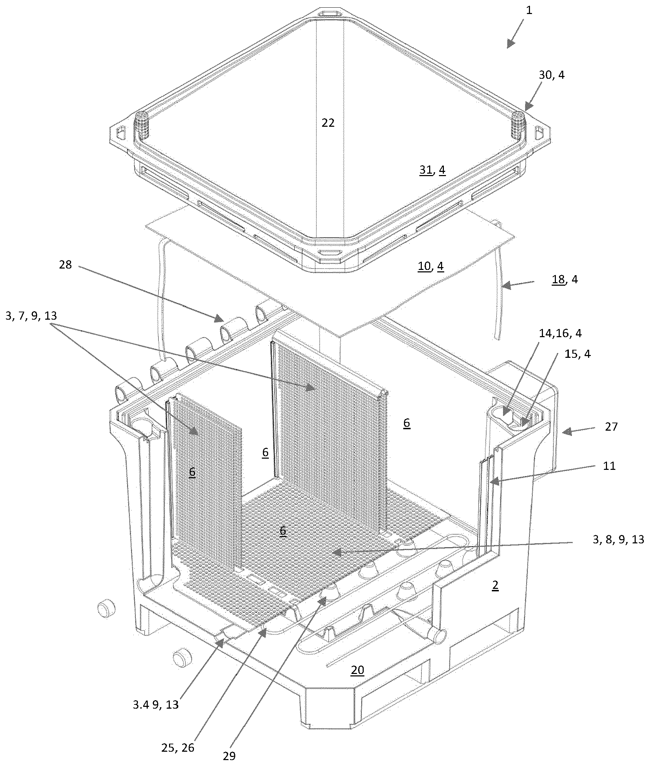

- Fig. 1:: eine erste Ausführungsform eines Reaktors in perspektivischer Ansicht mit Deckel,

**Fig. 1** zeigt eine erste Ausführungsform eines erfindungsgemäßen Kompostreaktors 1 in perspektivischer Ansicht mit zugehörigem Deckel. Zu erkennen ist die Reaktorhülle 2 aus einem PE-Material, insbesondere einem LMDPE, wobei die Reaktorhülle 2 in dieser Ausführungsform mit einem Schaumkern zu Isolationszwecken versehen ist, insbesondere eine PU- oder einem PE-Schaumkern. Andere Materialien können für die Reaktorhülle ebenfalls verwendet werden, sofern diese nicht toxisch auf Mikroorganismen wirken, keine chemischen Verbindungen in das Substrat abgeben und temperaturstabil im Bereich von bevorzugt -20°C bis 90°C, insbesondere von -5°C bis 70°C, sind. Andere erfindungsgemäße Ausführungsformen weisen keinen Isolationskern auf, insbesondere solche, die für den Einsatz in gemäßigten Klimata gedacht sind. Bei diesen entfällt auch die weiter unten beschriebene Heizvorrichtung nebst Steuerung.

Die Reaktorhülle 2 kann erfindungsgemäß aus geschweißten Platten gebildet sein oder auch in einem Urformverfahren wie dem Rotationsformen gebildet sein. Sie definiert und bildet einen Innenraum 5, der durch zwei luftdurchlässige Wandstrukturen 7 in Kompartimente 6 unterteilt ist. Am Boden der Reaktorhülle 2 befindet sich eine luftdurchlässige Bodenstruktur 8. Die Reaktorhülle 2 kann zylindrisch, kubisch, sphärisch, konisch oder in anderen geometrischen Formen ausgebildet sein.

Beide luftdurchlässigen Strukturen 7, 8 sind bei dieser Ausführungsform gebildet durch zueinander beabstandete Gitternetzstrukturen, bzw. wabenförmige Körper, deren Porenweite ausreichend gering ist, um kein Substrat aufnehmen zu können. Erfindungsgemäß sind die Formen und Größen der Poren in einem sehr breiten Bereich wählbar, bevorzugt in einem Porengrößenbereich von 0,5 cm bis 2,5 cm mit Formen von Kreisen, Rauten, Rechtecken, Quadraten, Fünf- oder Sechsecken, Ovalen und vielem mehr. Bevorzugt sind vor allem solche Porengrößen, die den Durchtritt von Würmern ermöglichen, so dass diese von einem abzuerntenden Kompartiment zum benachbarten Kompartiment wechseln können. Hierdurch werden die für die Rotte bedeutsamen Würmer im Kompostreaktor zurückgehalten, wenn das eine Kompartiment geerntet werden soll. Die luftdurchlässige Wandstruktur 7 weist bei dieser Ausführungsform eine Größe von 1.000 x 1.020 x 559 mm auf und wird in Führungsschienen 11 an der Reaktorhülle 2 geführt, die entweder an diese angeformt und mit ihr hergestellt werden oder nachträglich mit ihr verbunden werden, wobei ersteres bevorzugt ist. Die Dicke der luftdurchlässigen Wandstrukturen 7 beträgt hier 5 mm bis 8 mm, um eine ausreichende mechanische Widerstandsfähigkeit gegen den im Benutzungszustand herrschenden Druck durch das Substrat zu gewährleisten. Sie bestehen bei dieser Ausführungsform aus LDPE und sind zueinander zwischen 30 mm und 40 mm beabstandet, so dass ein ausreichender Luftaustauschraum in ihrem Inneren gegeben ist. Das Material der Reaktorhülle 2 kann erfindungsgemäß jedes andere Material sein, solange dieses nicht toxisch für Mikroorganismen ist und in den genannten Temperatur- und pH-Wert-Bereichen insbesondere auch unter UV-Einstrahlung stabil und widerstandsfähig ist.

Nicht dargestellt ist die bevorzugte Ausführungsform der Erfindung, gemäß der die Belüftungseinrichtung aus der luftdurchlässigen Bodenstruktur und mehreren, in das Substrat eingebrachten Belüftungskanälen besteht. Letztere sind dabei gänzlich frei von weiteren Bauteilen in das Substrat gebohrte Kanäle, deren räumlicher Verlauf, räumliche Ausprägung und Durchmesser daher auch während der Zeit der Rotte aufgrund der sich zeitlich ändernden Substratstruktur und - zusammensetzung ändern. Diese in das Substrat gebohrten Kanäle führen ebenfalls zu einer Kompartimentierung des Substrates und dazu, dass kein Teil des Substrats weiter als 50 cm, bevorzugt 25 bis 30 cm, von einem solchen Kanal der Belüftungseinrichtung entfernt ist.

Eine Abdeckung während der Befüllung stellt sicher, dass kein Substrat in den Zwischenraum gelangen und diesen blockieren kann. In Fig. 1 dargestellt ist eine teilweise Explosionsansicht bezüglich der Strukturen 7, so dass die Führungsschienen 11 gut zu erkennen sind.

Die Kompartimentierung stellt zusammen mit den luftdurchlässigen Strukturen 7, 8 sicher, dass kein Teil des im Benutzungsfall im Kompartiment befindlichen Substrats weiter als 25 bis 30 cm von einer Belüftungsmöglichkeit durch die luftdurchlässigen Strukturen 7, 8 entfernt ist. Die Kompartimentierung ermöglicht gleichzeitig, dass der erfindungsgemäße Kompostreaktor 1 kontinuierlich betrieben werden kann und nicht länger batchartig betrieben werden muss. Eine fertige Rotte in einem Kompartiment kann entnommen und durch frisches Substrat ersetzt werden, ohne dass die Rotte in den anderen Kompartimenten unter- oder abgebrochen werden muss.

In zwei einander diagonal gegenüberliegenden Ecken der Reaktorhülle 2 sind jeweils ein Regenwassersammelvolumen 14 angeordnet, in das das über das in Figur 2 beschriebene Regenwassersammeldeckel eingefangene Regenwasser geleitet wird. Mit Vorteil kann so auf eine gesonderte Wasserzufuhr verzichtet werden.

Mehrere reversibel verschließbare Auslässe 13 befinden sich im Bodenbereich 20 der Reaktorhülle und stehen jeweils mit dem Innenraum 5 in Verbindung. Ein Auslass 13 dient zum Ablassen des initial im Innenraum 5 zur Befeuchtung des Substrats befindlichen Wassers. Danach ermöglicht er den Austausch von Außen- und Innenluft, indem er während der Rotte offen gelassen wird. Die nicht mit Bezugszeichen versehenen Verschlüsse dieser Auslässe sind ebenfalls dargestellt. Erfindungsgemäß sind mehrere Auslässe 13 vorgesehen, insbesondere vier, so dass ein Bediener von jeder Seite der Reaktorhülle Zugang zu einem Auslass 13 hat.

Die Reaktorhülle 2 weist eine hier nur schematisch dargestellte Kupplungsvorrichtung 28 auf, mit der sie an eine weitere Reaktorhülle ankoppelbar ist. Da das Substrat bei seiner Reifung nach einem Jahr etwa ½ bis ¾ seines Volumens und nach einem halben Jahr ungefähr die Hälfte seines Volumens verloren hat, ermöglicht diese Kopplungsvorrichtung ein Umfüllen eines halbvollen Reaktors in einen zweiten halbvollen. Hierbei wird erfindungsgemäß das Substratgefüge so wenig wie möglich gestört, um das Myzel der Pilze nicht zu zerstören, da das Substrat nicht umgeschaufelt, sondern im Block überführt wird.

Nicht dargestellt ist eine Würmersammelvorrichtung, die im einfachsten Fall eine mit ansprechender Nahrung gefüllte Schale ist, die auf das Substrat gestellt wird, um so die Würmer anzulocken.

Im Bodenbereich befinden sich kegelstumpfförmige Abstandshalter 29, auf denen das luftdurchlässige Bodenelement 8 aufliegt. Das in dem so gebildeten Raum befindliche Wasser, bzw. die dort befindliche Luft stehen mit der Außenwelt und dem Substrat in Verbindung und stellen eine ausreichende Sauerstoffzufuhr auch von unten an das Substrat sicher.

Jedes Regenwasservolumen 14 besteht aus einer Mulde 15, in deren Boden ein Sackloch und eine daneben angeordnete Durchgangsöffnung angeordnet sind. In das Sackloch wird das durch den Deckel 22 aufgefangene Regenwasser geleitet. Übersteigt das Wasservolumen die Aufnahmefähigkeit dieses Sackloches, so fließt überschüssiges Wasser durch die Durchgangsöffnung in den Bodenbereich der Reaktorhülle 2 ab. Ein nicht dargestellter Deckel deckt diese Öffnungen während des Befüllens des Reaktors mit Substrat erfindungsgemäß ab und verhindert so deren Verstopfen durch versehentlich hinein gelangtes Substrat. Aus dem Bodenbereich der Reaktorhülle 2 kann dort befindliches, insbesondere überschüssiges Wasser durch eine Öffnung in der Seitenwand abgelassen werden. Diese Öffnung ist verschließbar und kann auch als Belüftungsöffnung verwendet werden.

Die erfindungsgemäß vorgesehene Kapillarmatte 10 als Teil der Befeuchtungseinrichtung ragt mit je einer Anformung 18 in ein Regenwassersammelvolumen 14 und entnimmt aus diesem mittels Kapillarwirkung Wasser und führt dieses der Oberseite des Substrates zu.

Der Deckel 22 weist an seinem Rand einen Umgriff auf, mit dem er den Rand der Reaktorhülle 2 umgreift und so sicher befestigbar ist. Er ist leicht konisch ausgebildet, so dass Regenwasser an seinen Seiten herablaufen und deckelumfänglich sammelbar ist, von wo aus es in die Regenwassersammelvolumina 14 geleitet wird. Dargestellt ist auch ein Regenwasserfilter 30 im Deckel 22 unmittelbar oberhalb des Regenwasserreservoirs 14.

Er weist weiter auf seiner zum Substrat gerichteten Seite eine derart vertikal geneigte Platte 31 auf, so dass gesammeltes Regenwasser zu den Filtern 30 läuft und durch diese in das Sammelvolumen 14 gelangt.

Zu erkennen ist auch hier ein Gehäuse, in der die Elektronik 27 angeordnet ist. Die erfindungsgemäß vorgesehenen aber nicht dargestellten Sensoren sind in den Kompartimenten an der Reaktorhülle 2 vertikal zueinander beabstandet angeordnet, sowie mindestens ein Sensor an der Außenseite der Reaktorhülle 2 zur Bestimmung der Außentemperatur. Die Elektronik 27 schaltet das oder die Heizelemente ein und aus, was ggf. auch zeitgesteuert oder in Begrenzung der Anzahl der Heizzyklen pro Tag oder Stunde erfolgen kann. Im einfachsten Fall ist das Heizelement als eine auf der subtratseitigen Seite des luftdurchlässigen Bodenelements angeordnete Heizleitung ausgebildet, insbesondere eine 10m lange und für 200W ausgelegte Heizleitung 26, die aktiviert wird, wenn die Temperatur der Rotte unter 5°C sinkt.

Wenigstens ein Sensor kann auch ein Feuchtigkeitssensor sein, um die Feuchte des Substrats während der Rotte zu bestimmen und ggf. auch aufzuzeichnen.

**Fig. 1** zeigt auch den Boden des Kompostreaktors 1. Zu erkennen ist, dass die Reaktorhülle 2 auf ihrer Unterseite palettenartig ausgebildet und auf ihrer zum Innenraum 5 gerichteten Bodenseite 20 mit Abstandshaltern 29 für die luftdurchlässige Bodenstruktur 8 versehen ist. Diese Abstandshalter 29 sind hier nicht stegartig, sondern kegelstumpfartig ausgebildet und gewährleisten einen Abstand zur Bodenstruktur 8 von rund 6 cm, was für eine gute Luftzufuhr und einen guten Gasaustausch günstig ist.

### Bezugszeichenliste

- 1: Kompostreaktor
- 2: Reaktorhülle
- 3: Belüftungseinrichtung
- 4: Befeuchtungseinrichtung
- 5: Innenraum
- 6: Kompartiment
- 7: luftdurchlässige Wandstruktur
- 8: luftdurchlässige Bodenstruktur
- 9: Luftzutrittsöffnung
- 10: Kapillarmatte
- 11: Führungsschiene
- 12 13: Auslass
- 14: Regenwassersammelvolumen
- 15: Mulde
- 16: Sackloch
- 17: Durchgangsöffnung
- 18: Anformung
- 19: Gitterstruktur
- 20: Bodenbereich
- 21 22: Deckel
- 23 24: Auffangvolumen
- 25: Heizelement
- 26: Heizleitung
- 27: Elektronik
- 28: Kupplungsvorrichtung
- 29: Abstandshalter
- 30: Regenwasserfilter
- 31: Regenwasserleitungsplatte

## Patentansprüche

1. Kompostreaktor (1), aufweisend eine Reaktorhülle (2) mit darin angeordneter Belüftungseinrichtung (3) und daran angeordneter Befeuchtungseinrichtung (4), wobei
- die Belüftungseinrichtung (3) wenigstens eine, einen Innenraum (5) der Reaktorhülle (2) in getrennte Kompartimente (6) teilende, luftdurchlässige Wandstruktur (7) und/oder eine luftdurchlässige Bodenstruktur (8) und wenigstens eine Luftzutrittsöffnung (9) in der Reaktorhülle (2) umfasst und wobei
- die Befeuchtungseinrichtung (4) eine Vorrichtung zur Abgabe von Feuchtigkeit an das im Benutzungsfall im Kompostreaktor (1) befindliche Substrat aufweist.

2. Kompostreaktor (1) gemäß Anspruch 1, **dadurch gekennzeichnet, dass** die Wandstruktur (7) eine dreidimensionale Gitterstruktur (19) ist, insbesondere eine doppelwandige Gitterstruktur (19) ist.

3. Kompostreaktor (1) gemäß Anspruch 1, **dadurch gekennzeichnet, dass** die Belüftungseinrichtung (3) wenigstens zwei, in das im Benutzungsfall im Kompostreaktor befindliche Substrat eingebrachte Belüftungskanäle aufweist, insbesondere zur Kompartimentierung des Substrats.

4. Kompostreaktor (11) gemäß Anspruch 1, 2 oder 3, **dadurch gekennzeichnet, dass** ein Kompartiment (6) eine solche Grundfläche und Höhe aufweist, dass weitestgehend ein Punkt einer im Benutzungsfall darin befindlichen Rotte nicht weiter als 50 cm, insbesondere nicht weiter als 35 cm bevorzugt nicht weiter als 25 cm von einem Bestandteil der Belüftungseinrichtung (7, 8) entfernt ist.

5. Kompostreaktor (11) gemäß Anspruch 1, 2 oder 3, **dadurch gekennzeichnet, dass** die Befeuchtungseinrichtung (3) eine, im Benutzungsfall oberhalb eines im Kompostreaktor (1) befindlichen Substrats angeordnete, Kapillarmatte (10) zur flächenhomogenen Abgabe von Feuchtigkeit an das Substrat aufweist.

6. Kompostreaktor (1) gemäß einem der vorherigen Ansprüche, **dadurch gekennzeichnet, dass** die Reaktorhülle (2) einen Regenwassersammler (14) als Teil der Befeuchtungseinrichtung (4) aufweist, insbesondere in Form eines Deckels (22), und/oder eine Filtereinrichtung (30) für Regenwasser und/oder die Reaktorhülle (2) ein Regenwassersammelvolumen (14) aufweist.

7. Kompostreaktor (1) gemäß einem der vorherigen Ansprüche, **dadurch gekennzeichnet, dass** die Reaktorhülle (2) ein Auffangvolumen (24) für im Benutzungsfall aus der Rotte austretende Flüssigkeit aufweist.

8. Kompostreaktor (1) gemäß einem der vorherigen Ansprüche, **dadurch gekennzeichnet, dass** die Reaktorhülle (2) ein oder mehr Mitglieder der Gruppe aufweist, gebildet durch ein Heizelement (25), einen Sensor, eine Elektronik (27), insbesondere ein Computer mit Datenspeicher- und Ausgabefunktion, eine Kupplungsvorrichtung (28), Abstandshalter (29), eine Wärmeisolierung, einen Sammelbehälter für Würmer.

9. Verfahren zur Rotte eines Substrats, insbesondere unter Verwendung eines Kompostreaktors gemäß einem der vorherigen Ansprüche, aufweisend einen ersten Schritt, bei dem Substrat mit Rottehilfsstoffen vermischt und homogenisiert wird, weiter aufweisend einen zweiten Schritt, bei dem das Substrat mit Wasser derart versetzt wird, dass freies, nicht an das Substrat gebundenes Wasser vorliegt, weiter aufweisend einen dritten Schritt, bei dem das nicht am Substrat gebundene Wasser nach dem zweiten Schritt entfernt wird, weiter aufweisend einen vierten Schritt der Rotte des Substrates.

10. Verfahren gemäß Anspruch 9, bei dem alle oder einzelne Schritte in einem Kompostreaktor gemäß der Ansprüche 1 bis 8 durchgeführt werden.

11. Verfahren gemäß Anspruch 9 oder 10, bei dem ein Schritt des Einbringens von Belüftungskanälen in das Substrat vorgesehen ist, wobei diese insbesondere durch Einstechen und Herausziehen von länglichen rohrförmigen Gegenständen, insbesondere bis zu dessen oder annähernd bis zu dessen unterem Ende, eingebracht werden.

12. Verfahren gemäß Anspruch 11, bei dem der Schritt des Einbringens der Belüftungskanäle vor oder nach dem zweiten Schritt erfolgt.

13. Verfahren gemäß einem der Ansprüche 9 bis 12, bei dem in einem weiteren Schritt Würmer zugegeben werden, insbesondere nach Abschluss der initialen Erwärmungsphase des Substrats nach 2 bis 3 Wochen, wenn die Rottetemperatur auf weniger als 28°C gefallen ist, wobei ein Schritt des Absammelns der Würmer vor der Ernte der reifen Rotte vorgesehen ist.

14. Verfahren gemäß einem der Ansprüche 9 bis 13, bei dem ein Schritt des Bewässerns des Substrats während der Rotte vorgesehen ist und/oder eine Temperaturkontrolle und/oder Temperaturregelung während der Rotte vorgesehen sind.
